# EUROPÄISCHE PATENTSCHRIFT

(11) **EP 1 334 881 B1**
(45) Veröffentlichungstag und Bekanntmachung des Hinweises auf die Patenterteilung: **15.11.2006**
(21) Anmeldenummer: 02028457.6
(22) Anmeldetag: 19.12.2002
(51) Int. Cl.: B60R 16/04

(54) **Tragrahmen bzw. Tragkasten für eine Batterie oder dergleichen an Lastkraftwagen**
Carrier frame and box for a battery or the like for lorries
Châssis porteur et boîte pour une batterie ou similaire pour camions

(30) Priorität: 07.02.2002 DE 10205036
(43) Veröffentlichungstag der Anmeldung: 13.08.2003
(73) Patentinhaber: DaimlerChrysler AG, 70567 Stuttgart (DE)
(72) Erfinder: Brandes, Hans-Dieter, 71384 Weinstadt (DE); Krauth, Gerhard, 74850 Schefflenz (DE); Martin, Gerd, 70327 Stuttgart (DE)

(56) Entgegenhaltungen:
- DE-A1- 4 340 007
- DE-C1- 19 835 580
- US-A- 2 035 066

## Beschreibung

Die Erfindung betrifft einen an einem Fahrgestellrahmen eines Lastkraftwagens angebundenen Tragrahmen bzw. -kasten für eine Batterie und/oder Geräte.

Aus der gattungsbildenden DE-OS 22 53 873 ist ein solcher Batterie- und Geräteträger bekannt, welcher als teilbares Gehäuse ausgebildet ist, wobei das Gehäuseunterteil mit einer Gehäuseseite an einer Fahrzeugseite seitlich an einem Längsholm des Fahrgestellrahmens des Lastkraftwagens befestigt ist. Auf dem Boden des Gehäuseunterteiles ist unter Zwischenschaltung von Gummilagern eine Plattform angeordnet, die als Standfläche für Batterien vorgesehen ist. Diese Plattform bildet eine ständig ebene Fläche, und zwar auch dann, wenn das Gehäuse aufgrund von Verwindungen des Fahrgestellrahmens verformt wird.

Aus der EP 0 591 717 B1 ist es bekannt, Lastkraftwagen mit einem Unterfahrschutz zu versehen, welcher an den Fahrzeugseiten derart angeordnet ist, daß gegebenenfalls seitlich am Fahrzeugrahmen angeordnete Aufnahmegehäuse für Batterien u.dgl. vor Kollisionen geschützt werden.

Aufgabe der Erfindung ist es nun, einen Tragrahmen bzw. -kasten für eine besonders gut geschützte Unterbringung von Batterien und/oder Geräten zu schaffen.

Diese Aufgabe wird erfindungsgemäß dadurch gelöst, daß der Tragrahmen bzw. -kasten im Abstandsraum zwischen zwei horizontal voneinander beabstandeten Holmen des Fahrgestellrahmens untergebracht und mit beiden Holmen bedämpft federbar verbunden ist.

Die Erfindung beruht auf dem allgemeinen Gedanken, den zwischen Holmen des Fahrgestellrahmens bei Lastkraftwagen regelmäßig zur Verfügung stehenden und auch bei Kollisionen des Fahrzeuges gut gesicherten Raum zur Anordnung des Tragrahmens bzw. -kastens auszunutzen und dabei den Tragrahmen bzw. -kasten sowohl gegenüber Verwindungen des Fahrgestellrahmens als auch gegenüber Erschütterungen durch federnd nachgiebige Lagerung an den Holmen abzukoppeln. Hierbei ist vorteilhaft, daß trotz der nachgiebigen Lagerung des Tragrahmen bzw. -kastens durch dessen Verankerung an zwei Holmen des Fahrgestellrahmens eine hohe Stabilität gewährleistet werden kann, insbesondere kann eine vorgegebene Lage relativ zur Ebene des Fahrgestellrahmens ohne weiteres gewährleistet werden.

Gemäß einer besonders bevorzugten Ausführungsform der Erfindung ist vorgesehen, den Tragrahmen bzw. -kasten am Fahrzeugheck zwischen den Längsholmen des Fahrwerkrahmens anzuordnen, wobei der Tragrahmen bzw. -kasten neben Batterien gegebenenfalls auch weitere Geräte, insbesondere pneumatische Druckbehälter für die Bremsanlage, tragen kann.

Durch die federnde Lagerung des Tragrahmens bzw. -kastens ist sicher gewährleistet, daß auch sehr starke Erschütterungen oder Stöße des Fahrwerkrahmens hinreichend gemildert auf die vom Tragrahmen bzw. -kasten getragenen Geräte, insbesondere die hinsichtlich Stöße vergleichsweise empfindlichen Batterien, übertragen werden.

Für die Federung sind bevorzugt Elastomer-Elemente vorgesehen, so daß aufgrund der guten Eigendämpfung des Elastomermaterials auf gesonderte Dämpferelemente verzichtet werden kann.

Die Federelemente besitzen zweckmäßigerweise Montagehilfen in Form von Abstützelementen für den Tragrahmen bzw. -kasten, derart, daß der Tragrahmen bzw. -kasten provisorisch an den Federelementen gelagert und nachfolgend die Befestigungselemente bzw. -schrauben zwangsfrei montiert werden können.

Im übrigen wird hinsichtlich bevorzugter Merkmale der Erfindung auf die Ansprüche sowie die Erläuterung der Zeichnung verwiesen, anhand der eine besonders bevorzugte Ausführungsform der Erfindung näher beschrieben wird.

### Dabei zeigt

Fig. 1 eine schematisierte Draufsicht auf den Heckbereich eines Fahrgestellrahmens eines Lastkraftwagens mit erfindungsgemäßem Tragrahmen und
Fig. 2 eine perspektivische Ansicht eines Federlager des Tragrahmens.

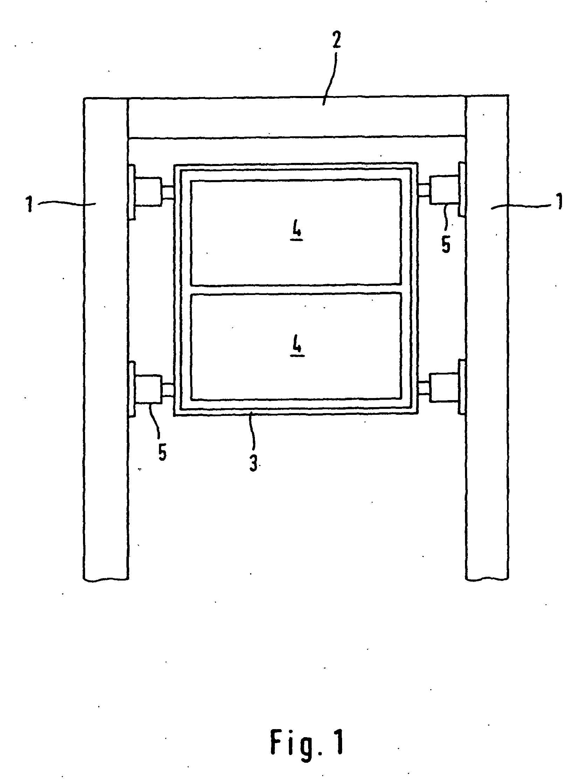

Gemäß Fig. 1 umfaßt ein Fahrwerksrahmen eines nicht näher dargestellten Lastkraftwagens im Heckbereich des Fahrzeuges zwei Längsholme 1 sowie eine heckseitige Traverse 2, die mit den vorgenannten Längsholmen 1 in Draufsicht U-förmig verbunden ist. Zwischen den Längsholmen 1 ist benachbart zur Traverse 2 ein im wesentlichen wannenförmiger Tragkasten 3 angeordnet, welcher zwei elektrische Batterien 4 aufnimmt.

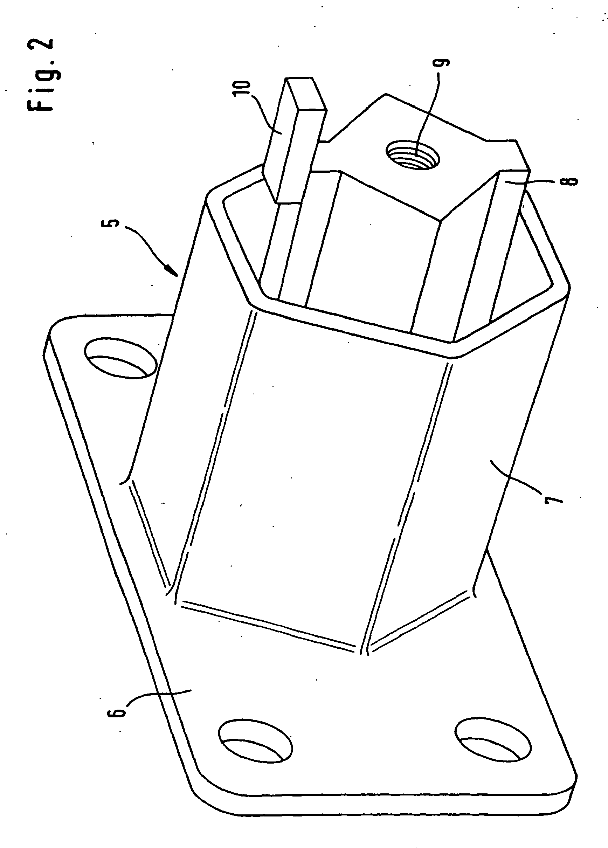

Zur Halterung des Tragkastens 3 dienen zwischen den Längsseitenwänden des Tragkastens 3 und den Längsholmen 1 angeordnete Federlager 5, deren Konstruktion anhand der Fig. 2 näher erläutert wird.

Jedes Federlager 5 besitzt gemäß Fig. 2 einen mit der inneren Längsseitenfläche eines der Längsholme 1 verschraubten Flansch 6, an dem ein an seinem flanschfernen Ende offener Topf 7 fest angeordnet bzw. angeformt ist. Innerhalb des Topfes 7 ist ein Kernteil 8 angeordnet, welches einen deutlich geringeren Querschnitt als der Innenraum des Topfes 7 aufweist und innerhalb des Topfes 7 mit zwischen dem Außenumfang des Kernteiles 8 und dem Innenumfang des Topfes 7 angeordneten Federelementen aus Elastomermaterial (nicht sichtbar) federbar abgestützt ist, und zwar derart, daß das Kernteil 8 sowohl radial zu seiner Längsachse als auch axial zu federn vermag.

Im dargestellten Beispiel sind sowohl der Topf 7 als auch das Kernteil 8 jeweils vieleckig bzw. sechseckig ausgebildet, so daß dem Kernteil im Topf 7 eine zwar drehelastische, jedoch vergleichsweise drehfeste Lagerung geboten wird.

Der aus dem Topf 7 herausragende Abschnitt des Kernteiles 8 besitzt eine Gewindebohrung 9 zur Aufnahme einer Befestigungsschraube, mit der die jeweilige Seitenwand des Tragkastens 3 mit der zugewandten Stirnseite des jeweiligen Kernteiles 8 fest verschraubt werden kann.

Am Kernteil 8 ist eine vorspringende Nase 10 angeordnet, die in eine entsprechende Aussparung an der zugewandten Seitenwand des Tragkastens 3 eingreift, so daß der Tragkasten 3 bei der Montage zunächst provisorisch an den Kernteilen 8 der Federlager 5 abgestützt bzw. gelagert werden kann, bevor die vorgenannten Befestigungsschrauben eingedreht und festgespannt werden. Die Nasen 10 und die damit zusammenwirkenden Aussparungen an den Seitenwänden des Tragkastens 3 sind so relativ zueinander angeordnet, daß sich die Befestigungsschrauben zwangsfrei einsetzen lassen.

Aufgrund der Federlager 5 ist einerseits gewährleistet, daß sich der durch die Längsholme 1 sowie die Traverse 2 gebildete Fahrwerksrahmen des Fahrzeuges verwinden kann, ohne dabei den Tragkasten 3 zu verformen. Darüber hinaus werden durch die Federlager 5 starke Erschütterungen und Schwingungen des Fahrwerksrahmens vom Tragkasten 3 ferngehalten, so daß die Batterien 4 gegen zerstörerische Stöße sicher geschützt sind.

Zusätzlich oder alternativ zu den Batterien 4 kann der Tragkasten 3 auch weitere Aggregate oder Ausrüstungsteile des Fahrzeuges tragen. Beispielsweise können an der Unterseite des Tragkastens 3 pneumatische Druckspeicher des fahrzeugseitigen pneumatischen Drucksystems und insbesondere eines pneumatischen Bremssystems angeordnet werden.

Der Tragkasten 3 ist also ganz allgemein als Geräteträger einsetzbar und kann mit den von ihm getragenen Geräten als komplett montierbares Modul vorgefertigt werden.

Abweichend von der Darstellung der Fig. 2 können die Nasen 10 an den Federlagern auch entfallen, wenn am Tragkasten 3 seitliche horizontale Flansche angeordnet sind, mit denen sich der Tragkasten 3 auf den Kernteilen 8 lagern bzw. abstützen läßt, bevor die Kernteile 8 mit dem Tragkasten 3 verschraubt bzw. fest verbunden werden.

## Patentansprüche

1. An einem Fahrgestellrahmen (1,2) eines Lastkraftwagens angebundener Tragrahmen bzw. -kasten (3) für eine Batterie (4) und/oder Geräte, **dadurch gekennzeichnet, dass** der Tragrahmen bzw. -kasten im Abstandsraum zwischen zwei horizontal voneinander beabstandeten Holmen (1) des Fahrgestellrahmens untergebracht und mit beiden Holmen bedämpft federbar verbunden ist.

2. Tragrahmen bzw. -kasten nach Anspruch 1,
**gekennzeichnet**
**durch** eine Anordnung zwischen zwei Längsholmen (1) des Fahrgestellrahmens.

3. Tragrahmen bzw. -kasten nach Anspruch 1 oder 2
**gekennzeichnet**
**durch** eine Anordnung am Fahrzeugheck.

4. Tragrahmen bzw. -kasten nach einem der Ansprüche 1 bis 3,
**dadurch gekennzeichnet,**
**daß** am Tragrahmen bzw. -kasten weitere Aggregate oder Geräte angeordnet sind.

5. Tragrahmen bzw. -kasten nach einem der Ansprüche 1 bis 4,
**dadurch gekennzeichnet,**
**daß** zumindest ein Druckbehälter eines pneumatischen Drucksystems, insbesondere eines pneumatischen Bremssystems, des Fahrzeuges am Tragrahmen bzw. -kasten angeordnet ist.

6. Tragrahmen bzw. -kasten nach einem der Ansprüche 1 bis 5,
**dadurch gekennzeichnet,**
**daß** den Tragrahmen bzw. -kasten halternde Federlager (5) in Draufsicht auf den Tragrahmen bzw. -kasten zwischen dessen Seiten und benachbarten Rahmenholmen (1) des Fahrgestellrahmens angeordnet sind.

7. Tragrahmen bzw. -kasten nach einem der Ansprüche 1 bis 6,
**dadurch gekennzeichnet,**
**daß** zur federnden Halterung vorgesehene Federlager (5) als Elastomerlager ausgebildet sind.

8. Tragrahmen bzw. -kasten nach Anspruch 7,
**dadurch gekennzeichnet,**
**daß** jedes Federlager (5) einen Topf (7) mit im wesentlichen horizontal angeordneter Topfachse aufweist und innerhalb des Topfes ein Kernteil (8) über eine Elastomerfederanordnung federbar abgestützt ist.

## Claims

1. Supporting frame or case (3), connected to a chassis frame (1, 2) of a commercial vehicle, for a battery (4) and/or components, **characterized in that** the supporting frame or case is accommodated in the space between two horizontally spaced bars (1) of the chassis frame and is connected in a damped resilient manner to the two bars.

2. Supporting frame or case according to Claim 1,
**characterized by**
an arrangement between two longitudinal bars (1) of the chassis frame.

3. Supporting frame or case according to Claim 1 or 2,
**characterized by**
an arrangement at the rear of the vehicle.

4. Supporting frame or case according to one of Claims 1 to 3,
**characterized in that**
further units or components are arranged on the supporting frame or case.

5. Supporting frame or case according to one of Claims 1 to 4,
**characterized in that**
at least one pressure reservoir for a pneumatic pressure system, in particular a pneumatic braking system, of the vehicle is arranged on the supporting frame or case.

6. Supporting frame or case according to one of Claims 1 to 5,
**characterized in that**
spring bearings (5) mounting the supporting frame or case are arranged in plan view on the supporting frame or case between the sides thereof and adjacent frame bars (1) of the chassis frame.

7. Supporting frame or case according to one of Claims 1 to 6,
**characterized in that**
spring bearings (5) provided for resilient mounting take the form of elastomeric bearings.

8. Supporting frame or case according to Claim 7,
**characterized in that**
each spring bearing (5) comprises a pot (7) having a substantially horizontally arranged pot axis, a core part (8) being supported resiliently inside the pot by means of an elastomeric spring arrangement.

## Revendications

1. Châssis ou boîtier porteur (3) monté sur un châssis (1, 2) d'un camion, pour une batterie (4) et/ou appareils, **caractérisé en ce que** le châssis ou boîtier porteur est logé dans l'espace intermédiaire entre deux montants (1), espacés horizontalement l'un de l'autre, du châssis et est relié, élastiquement et de façon amortie, aux deux montants.

2. Châssis ou boîtier porteur selon la revendication 1, **caractérisé par** un agencement entre deux longerons (1) du châssis.

3. Châssis ou boîtier porteur selon la revendication 1 ou 2, **caractérisé par** un agencement sur l'arrière du véhicule.

4. Châssis ou boîtier porteur selon l'une des revendications 1 à 3, **caractérisé en ce que** d'autres groupes ou appareils sont disposés sur le châssis ou boîtier porteur.

5. Châssis ou boîtier porteur selon l'une des revendications 1 à 4, **caractérisé en ce qu'**au moins un récipient à pression appartenant à un système à pression pneumatique, en particulier un système de freinage pneumatique du véhicule, est disposé sur le châssis ou boîtier porteur.

6. Châssis ou boîtier porteur selon l'une des revendications 1 à 5, **caractérisé en ce que** des paliers élastiques (5), maintenant le châssis ou boîtier porteur, sont disposés, en observant en vue de dessus le châssis ou boîtier porteur, entre ses côtés et des montants de cadre (1) voisins du châssis.

7. Châssis ou boîtier porteur selon l'une des revendications 1 à 6, **caractérisé en ce que** des paliers élastiques (5), prévus pour une fixation suspendue élastiquement, sont réalisés sous forme de paliers en élastomère.

8. Châssis ou boîtier porteur selon la revendication 7, **caractérisé en ce que** chaque palier élastique (5) présente un pot (7), avec un axe de pot sensiblement horizontal, et, à l'intérieur du pot, une partie de noyau (8) est soutenue élastiquement, par l'intermédiaire d'un agencement à ressort en élastomère.
